# EUROPÄISCHE PATENTSCHRIFT

(11) **EP 0 505 710 B1**
(45) Veröffentlichungstag und Bekanntmachung des Hinweises auf die Patenterteilung: **29.12.1997**
(21) Anmeldenummer: 92102348.7
(22) Anmeldetag: 12.02.1992
(51) Int. Cl.: G02B 6/44

(54) **Kassette und Kassettenblock für Lichtwellenleiter**
Cartridge and cartridge stack for light wave guides
Cassette et pile de cassettes pour guides d'ondes lumineuses

(30) Priorität: 27.02.1991 DE 4106171
(43) Veröffentlichungstag der Anmeldung: 30.09.1992
(73) Patentinhaber: SIEMENS AKTIENGESELLSCHAFT, 80333 München (DE)
(72) Erfinder: Finzel, Lothar, Dipl.-Ing., W-8044 Unterschleissheim (DE); Ruckgaber, Thomas, Dipl.-Ing., W-8000 München 21 (DE); Lieber, Winfried, Dr. Dipl.-Ing., W-8033 Krailling (DE)

(56) Entgegenhaltungen:
- WO-A-89/05989
- DE-A- 3 413 401
- FR-A- 2 622 304
- GB-A- 2 233 111
- US-A- 4 840 449
- PATENT ABSTRACTS OF JAPAN vol. 4, no. 103 (P-20)(585) 23. Juli 1980; & JP-A-55 062 414

## Beschreibung

Die Erfindung betrifft eine Kassette und einen Kassettenblock zum Verbinden und Verzweigen von Lichtwellenleitern. Die Lichtwellenleiter sind durch Verbindungselemente- (Spleiße) oder Koppelelemente (Koppler, Splitter) verbunden. Eine sogenannte Reservelänge der Lichtwellenleiter wird in der Kassette abgelegt.

Eine Kassette zur Aufnahme von Lichtwellenleitern ist in der deutschen Offenlegungsschrift 34 13 401 beschrieben. Zwei Anschlußadern werden von der Mitte der Stirnseite der Kassette nach außen versetzt tangential den abgelegten Lichtwellenleitern zugeführt, wobei Niederhalter ein Aufsteigen der Fasern verhindern. Üblicherweise werden die Überlängen der Lichtwellenleiter erst nach dem Herstellen der Spleißverbindung abgelegt. Erfolgt dieses Ablegen in Kreisen oder Ovalen, so wird bei jeder gebildeten Schleife der Lichtwellenleiter verdreht. Dies führt bei mehreren notwendigen Schleifen zu großen Spannungen, durch die die Handhabung der Lichtwellenleiter erschwert wird, und zu einer Erhöhung der Dämpfung.

Es sind verschiedene Lösungen zur Vermeidung dieses Problems bekannt. In der japanischen Offenlegungsschrift 55-62414 ist eine acht-förmige Ablage der Lichtwellenleiter beschrieben.

Gattungsgemäße Kassetten sind auch aus WO-A-89/05989 und US-A-4,911,521 bekannt.

Beide Kassetten sind eher für das Verbinden von Lichtwellenleitern als zum Verzweigen auf mehrere Lichtwellenleiter geeignet und weisen entsprechend auch nur zwei Anschlußadern auf. Beim Verzweigen von Lichtwellenleitern über Koppler werden häufig mehrere Anschlußadern und mehrere Kassetten benötigt. Es ist an sich bekannt, mehrere Kassetten zu einem Kassettenblock zusammenzufassen.

Aufgabe der Erfindung ist es, eine Kassette und einen Kassettenblock zum Koppeln und Verzweigen von Lichtwellenleitern anzugeben.

Eine hierfür geeignete Kassette ist im Patentanspruch 1 angegeben. In einem unabhängigen Patentanspruch ist ein entsprechender Kassettenblock beschrieben. Vorteilhafte Ausbildungen der Erfindung sind in den Unteransprüchen angegeben.

Vorteilhaft bei der erfindungsgemäßen Kassette ist die Kombination von acht-förmiger und ringförmiger Ablage der Lichtwellenleiter. Entsprechend dem Verwendungszweck können bis zu vier Anschlußadern, dies sind in der Regel Bündeladern oder Bändchen in die Kassette geführt werden. Durch das tangentiale Einlaufen der Anschlußadern oder das Einlaufen mit einen noch größeren Anschlußradius werden kleine Krümmungsradien vermieden, die zu Dämpfungsverlusten führen. Durch die Art der Ablage ist es möglich, jeden Lichtwellenleiter einer Anschlußader mit jedem beliebigen Lichtwellenleiter einer der anderen Anschlußader zu verbinden. Es können Überlängen mit einem Vielfachen des Umfangs einer halben Acht kreisförmig abgelegt werden. Bei einer Korrektur der Überlänge, beispielsweise durch erneutes Spleißen, reicht es, die Überlänge um diesen Umfang zu verkürzen. Im Gegensatz zu vielen anderen Kassetten können mehrere Lichtwellenleiter abgelegt werden.

Es ist vorteilhaft, wenn die aus dem abgelegten Überlängen gebildete Acht aus zwei Ovalen besteht. Diese müssen sich nicht im Berührungspunkt tangieren, so daß sich die abgelegten Lichtwellenleiter im Berührungspunkt auch überschneiden können. Durch die ovalförmige Ausbildung ist auch ein Ablegen von Überlängen möglich, die von dem Umfang eines Ovals abweichen können, indem sie ein Oval mit verkleinerter Längsachse oder einen Kreis bilden.

Es ist vorteilhaft, wenn mehrcre Verbindungs- bzw. Koppelelemente an einer Längsseite der Kassette angeordnet sind. Diese Anordnung gewährleistet ein Einhalten der minimalen Biegeradien bei der Führung der Lichtwellenleiter. Die Montage der Koppelelemente kann auch außerhalb der Kassette erfolgen und die Verbindungselemente (Spleiße) und Koppelelemente sind stets einzeln zugängig.

Vorteilhaft ist auch ein schräges Einlaufen der Bündeladern. Da diese teilweise halbkreisförmig um die Kassette herum geführt werden müssen, wird durch Verlegung eines Teils des Halbkreises in die Kassette der Rangierplatzbedarf für die Anschlußader in Muffen und Gestellen verringert.

Es ist vorteilhaft, wenn mehrere Kassetten zu einem Kassettenblock zusammengefaßt werden, wobei jede Kassette mit ihrer benachbarten Kassette klappbar verbunden ist. Durch Aussparungen können Verbindungsleitungen mit Lichtwellenleitern von einer Kassette in die andere überführt werden. Durch die achtförmige Ablage können die Verbindungsleitungen zwischen den Kassetten in beiden Richtungen geführt werden. Bei funktional zusammengehörenden Kassetten wird eine übersichtliche Verdrahtung erzielt. Durch die Verbindung mit Scharnieren ist ein leichter Zugriff zu jeder Kassette des Kassettenblocks und damit ist eineeinfache Montage und Reparatur möglich.

Durch Aussparungen im Kassettenboden wird die Verdrahtung bei Verzweigungen wesentlich vereinfacht. Sind die Verbindungsleitungen und die Scharniere in einer Ebene angeordnet, dann ergibt sich nur eine geringe Relativbewegung beim Aufklappen. Bisher mußten entsprechende Lichtwellenleiter über Kabeleinführöffnungen einer Kassette hinaus und über die Einführöffnung der anderen Kassette wieder hineingeführt werden.

Es ist vorteilhaft, wenn die Aussparungen das Seitenteil mitumfassen. Hierdurch werden die Verbinaungsleitungen beim Aufklappen der Kassetten nur wenig durch Biegung beansprucht.

Es ist zweckmäßig, wenn alle Koppelelemente in einer Kassette vorgesehen sind. Hierdurch ergibt sich eine einfachere Verdrahtung und in diese Kassette muß bei Rangier- und Anschlußarbeiten nicht mehr eingegriffen werden.

Ausführungsbeispiele der Erfindung werden anhand von Figuren näher erläutert.

Es zeigen:
- Fig. 1: die Draufsicht einer Kassette,
- Fig. 2: die Verdrahtung eines Kassettenblocks,
- Fig. 3: einen Kassettenblock,
- Fig. 4: einen aufgeklappten Kassettenblock.
- Fig. 5 und 6: Beipiele für die Ausbildung von Scharnieren.

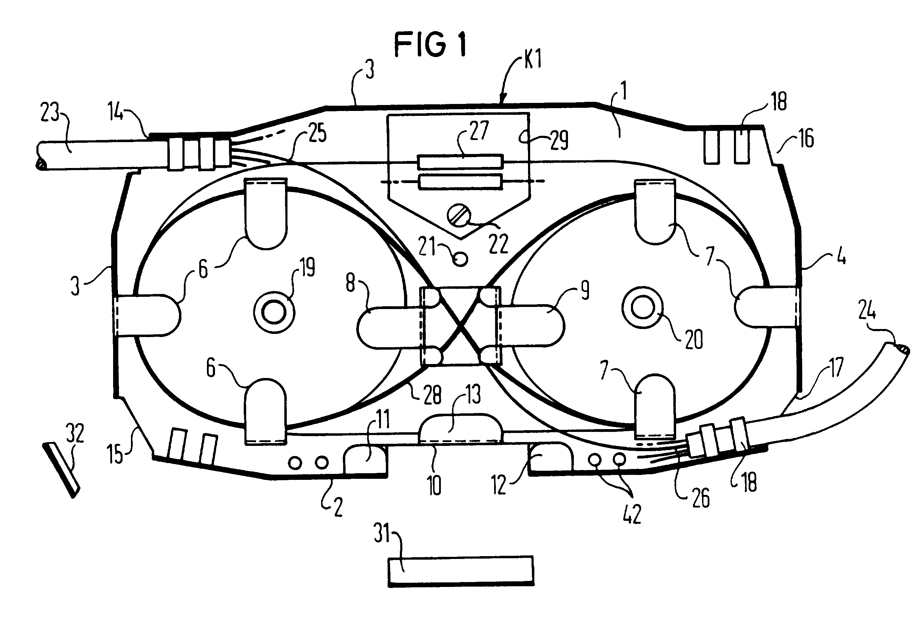

Die in Figur 1 in der Draufsicht dargestellte Kassette K1 besteht aus einem Kassettenboden 1, den Längsseitenteilen 2 und 3 sowie den Stirnseitenteilen 3 und 4. Durch die Seitenteile erhält die Kassette das Aussehen einer flachen, oben offenen Schachtel.

Für Anschlußadern (Bündeladern) 23, 24, ... sind in den Stirnseitenteilen 4 und 5 nach außen versetzte (bis an die Längsseitenteile 2 und 3) Einführöffnungen 14 bis 17 vorgesehen. Die Kabel können durch Befestigungsvorrichtungen (Zugentlastungen) 18 festgeklemmt werden. Niederhalter 6 und 8 sowie 7 und 9 sind jeweils am Umfang eines Ovals angeordnet und bilden eine Ablageeinrichtung. Der zentrale Niederhalter 8 und 9 ist als ein Teil ausgebildet. Parallel zum Kassettenboden 1 verlaufende Stege der Niederhalter verhindern ein Aufrichten der eingelegten Lichtwellenleiter. Die durch die Niederhalter 6 und 8 bzw. 7 und 9 vorgegebenen Ovale sind auf derselben Achse angeordnet, so daß sich die Lichtwellenleiter 25 und 26 in Form einer Acht - durch Wechseln der Richtung (links- und rechtsherum) von einem Oval in das andere - ablegen lassen. Der zentrale Niederhalter 8 und 9 sorgt durch mehrere Stege sowohl für eine Fixierung der ringförmig abgelegten als auch der acht-förmig geführten Lichtwellenleiterabschnitte. Der Begriff ringförmig umfaß hier auch eine kreisförmige, kreisähnliche und ovale Ablage. Ein zusätzlicher Niederhalter 13 ist für die um die achtförmige Ablage verlaufenden Lichtwellenleiter gedacht. Über die Verbindungselemente verläuft ein Lichtwellenleiter nur in Ausnahmefällen. Die Niederhalter können unterschiedlichst ausgebildet sein.

In Figur 1 sind die Längsachsen der Ovale größer als ihre Achsen in Querrichtung. Hierdurch ergeben sich längere jedoch schmale Kassetten. Es sind aus Gründen der Übersichtlichkeit nur zwei Lichtwellenleiter 25 und 26 dargestellt. In der Regel enthalten jedoch die Anschlußadern (Bündeladern) mehrere Lichtwellenleiter, die ebenfalls in der Kassette abgelegt werden können. Die Bündeladern können tangential zu den achtförmig abgelegten Lichtwellenleitern 28 verlaufen. In diesem Ausführungsbeispiel sind die Anschlußadern noch weiter nach außen versetzt. Hierdurch ergibt für sich für die Lichtwellenleiter eine Einlaufkurve mit einem größerem Radius, der dann in den kleineren Radius des jeweiligen Ovals übergeht.

Die Einlaufrichtung der Anschlußader 24 verläuft nicht parallel zur Längsachse der Kassette sondern schneidet diese. Die Anschluß adern werden durch die Stirnseitenteile 4 und 5 geführt und durch die Befestigungseinrichtungen 18 fixiert. Hierdurch kann die Anschlußader 24 mit geringerem Platzbedarf um die Kassette halbkreisförmig geführt werden. Dies ist für den Einbau der Kassette in Muffen von Bedeutung. An jeder Stirnseite der Kassette sollte zumindest eine Anschlußader auf diese Weise geführt werden können. Die Lichtwellenleiter werden durch Verbindungselemente 27 (Spleiße) oder Koppelelemente, die von einem Lichtwellenleiter auf mehrere verzweigen, miteinander verbunden. In der Regel sind mehrere Koppelelemente vorhanden, die auf einer Halterung 29 befestigt sind, die wiederum mit einer Schraube 22 auf dem Kassettenboden befestigt werden kann. Wegen des größeren Platzbedarfs der Verbindungs- und Koppelelemente ist die Ablagevorrichtung 6, 7, 8, 9 gegenüber der Mittelachse der Kassette versetzt.

Auf der gegenüberliegenden Seite der Kassette ist in der Mitte des Längsseitenteils 2 eine Aussparung 10 vorgesehen, die auch in den Kassettenboden hineinragt. Durch diese Aussparung können Verbindungsleitungen geführt werden. Diese Aussparung kann zunächst durch ein ausbrechbares Verschlußteil 31 verschlossen sein. Ebenso können auch die Einführöffnungen mit entsprechenden Verschlußteilen 32 gefertigt werden, die ebenfalls im Bedarfsfall ausgebrochen werden.

Die Kassette kann mit einem Deckel versehen und mit diesem beispielsweise verschraubt werden. Hierzu ist das Verbindungsloch 21 vorgesehen.

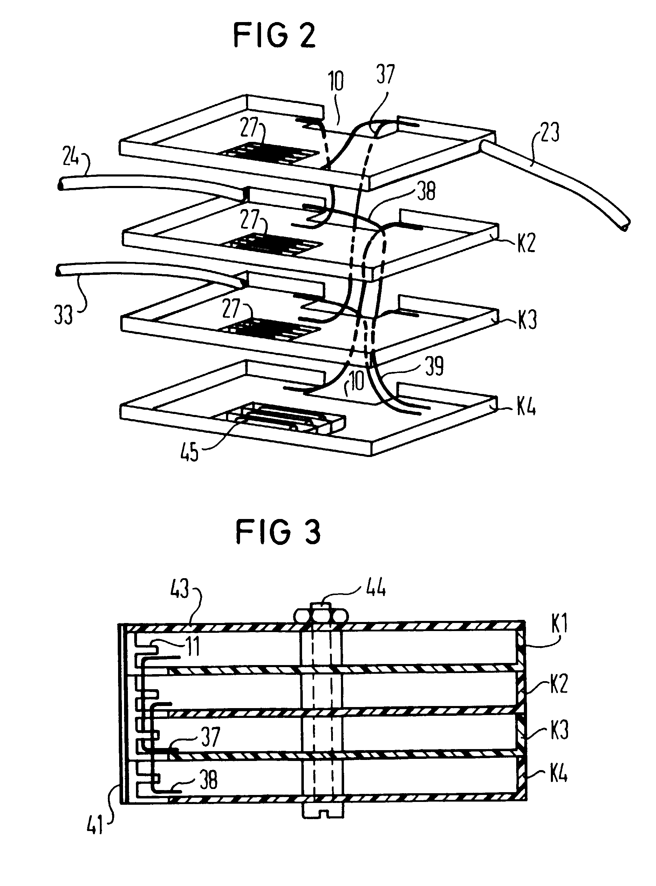

Die Kassette kann ebenfalls zum Verzweigen von Lichtwellenleiter verwendet werden. Hierzu werden Koppler mit jeweils einem Eingang und mehreren Ausgängen verwendet. Ebenso können auch Koppler mit mehreren Eingängen vorgesehen werden. Um eine größere Anzahl von Verzweigungen zu realisieren, werden mehrere Kassetten benötigt, die zu einem Kassettenblock mit den Kassetten K1 bis K4 nach Figur 2 zusammengefaßt werden. Die Verbindungsleitungen zwischen den Kassetten werden nicht mehr durch die Kabeleinführöffnungen geführt, sondern durch die Aussparungen 10. Mehrere Lichtwellenleiter werden jeweils zur Erhöhung der mechanischen Stabilität in einem Schutzschlauch zusammengefaßt. Dieser kann auch spiralförmig geschlitzt sein und so einfach über die Lichtwellenleiter geschoben werden. In der Kassette sind weitere Niederhalter 11 und 12 (Figur 1) vorgesehen, durch die Verbindungsleitungen bzw. deren Schutzschläuche fixiert werden. Aus Gründen der Übersichtlichkeit sind nur wenige Verbindungsleitungen 37, 38 und 39 dargestellt. Der zusätzliche Niederhalter 13 verhindert auch die Kollision der um die gesamte Acht verlaufenden Lichtwellenleiter mit den Verbindungsleitungen 37, 38, und 39.

Bei der Aufteilung von Lichtwellenleitern, die in einem Kabel 23 (oder auch mehreren Kabeln) in die oberste Kassette K1 geführt werden, wird so verfahren, daß sich eine besonders günstige Verdrahtung ergibt.

Im Ausführungsbeispiel nach Fig. 2 sind die ankommenden Lichtwellenleiter über Verbindungselemente 27, die in den Kassetten K1 bis K3 angeordnet sind, mit den Koppelelementen 45, die in der Kassette K4 angeordnet sind verbunden. Die Ausgänge der Koppelelemente 45 sind wieder über Verbindungselemente 27 mit den abgehenden Lichtwellenleitern der Anschlußadern 24 und 33 verbunden. Es können auch Ausführungsformen von Koppelelementen vorgesehen werden, bei denen die ankommenden und/oder abgehenden Lichtwellenleiter direkt angespleißt werden, beispielsweise durch Schweißen. Die Verbindungsleitungen zwischen den Kassetten werden ausschließlich durch die Aussparungen geführt. Hierbei ist es günstig, wenn in einer Kassette K4 nur Koppler 45 vorgesehen sind und in den übrigen Kassetten eines Kassettenblocks nur Verbinbungselemente 27 vorgesehen sind. Die abgehenden Anschlußadern sind mit 24 und 33 bezeichnet.

In Figur 3 ist ein Kassettenblock im Schnitt dargestellt. Die Kassetten K1 bis K4 werden auf einer Längsseite durch ein aufgeklebtes Gelenk- oder Scharnierband 41 buchförmig aufklappbar zusammengehalten. Durch Schraubverbindungen 44, für die Befestigungslöcher 19 und 20 (Fig. 1) vorgesehen sind, können sie miteinander und mit einer Trägereinrichtung verschraubt werden. Die oberste Kassette K1 ist durch einen Deckel 43 verschlossen.

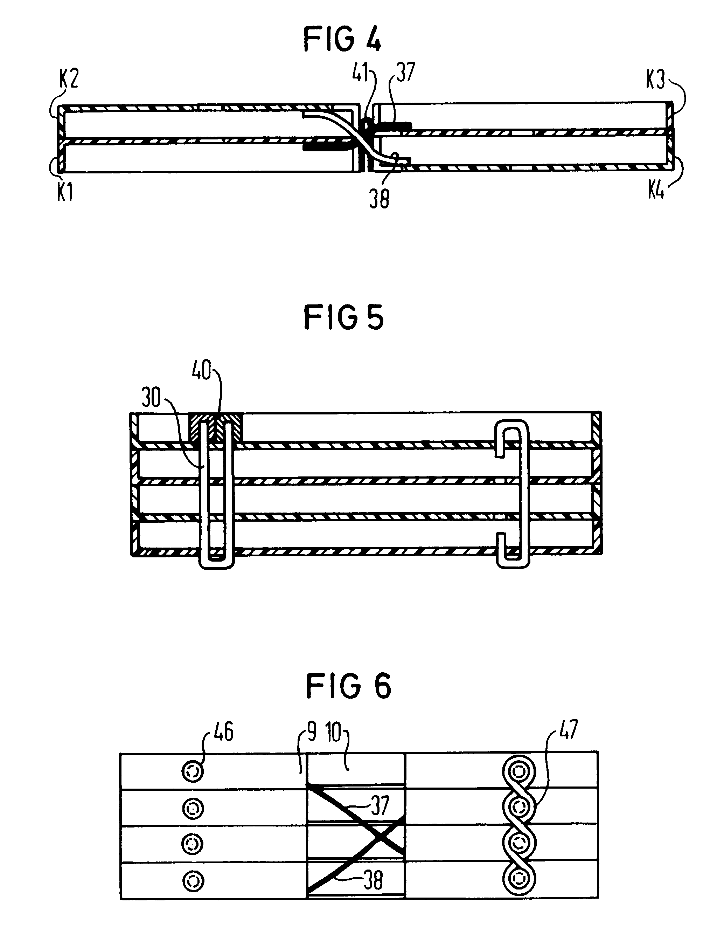

In Figur 4 ist eine aufgeklappte Kassette dargestellt, bei der Montagearbeiten in der jetzt nach oben offenen Kassette K3 vorgenommen werden können. Die Verbindungsleitungen 37 und 38, die im wesentlichen quer zur dargestellten Ebene verlaufen, werden nur gering durch Biegung beansprucht. Da die Aussparungen die Längsseitenteile 2 der Kassetten mit umfassen, werden die Verbindungsleitungen nur miminal gebogen.

In Figur 5 ist eine Variante zum klappbaren Verbinden der Kassetten dargestellt. Durch die in Figur 1 dargestellten Scharnierbandöffnungen 42 wird u-förmig ein elastisches Band oder Rundgummi 30 eingeführt. Die Enden können durch eine Klemmeinrichtung 40 fixiert werden.

Bei einer Variante ist das Rundgummi durch Einführen in die zweite Scharnieröffnung festgeklemmt.

In Figur 6 ist noch eine weitere Möglichkeit zum klappbaren Verbinden dargestellt. Um Zapfen 46 mit flachen Köpfen wird ein elastischer Ring 47 achtförmig gelegt.

Die Kassette oder der Kassettenblock kann auch zur Aufnahme von Reservelängen von durchgebenden Lichtwellenleitern oder von durchgehenden Bündeladern verwendet werden. Die Halterung für Verbindungs- oder Kopplerelemente kann dann entfallen.

## Patentansprüche

1. Kassette zur Aufnahme von Lichtwellenleitern (25, 26), die durch mindestens ein Verbindungselement (27) oder Koppelelement (45) miteinander verbunden sind, mit einem schachtelförmigen Basisteil, das je zwei gegenüberliegenden zargenförmigen Längsseitenteile (2, 3) und zwei Stirnseitenteile (4, 5) aufweist, wobei im Basisteil eine Ablagevorrichtung vorhanden ist, die aus Niederhaltern besteht, die auf den Umfangslinien zweier nebeneinanderliegender Ovale angeordnet sind und deren Stege radial nach innen ragen, mit Einführungsöffnungen (14 - 17) in den äußeren Bereichen der Stirnseitenteile (23, 24), wobei zumindest an einer der Einführungsöffnung ein Teilstück des Längsseitenteils ( 2, 3) als Führung so ausgebildet ist, daß die Lichtwellenleiter (25, 26) zumindest nahezu tangential bezüglich der Ablageovale oder nach außen versetzt geführt werden,
**dadurch gekennzeichnet,**
daß die Niederhalter (6, 7) so ausgebildet sind, daß innerhalb jedes durch die Niederhalter definierten Ablageovals die abzulegenden Lichtwellenleiter (25, 26, 28) eine Form zwischen kreisförmig und oval annehmen könne,
daß ein zentraler Niederhalter (8, 9) zwischen den Ablageovalen angebracht ist, der Stege für eine Fixierung der Lichtwellenleiter in einer achtförmigen, beide Ovale nutzenden Ablage aufweist, derart daß die Lichtwellenleiter entweder in einer beide Ovale umfassenden Acht oder kreis- bis ovalförmig in nur einem Ablageoval abgelegt werden können,
daß die Einführungsöffnungen (14 - 17) für die Aufnahme von Kabeln oder Anschlußadern (23, 24) ausgebildet sind und Befestigungsvorrichtungen (18) aufweisen und
daß das Teilstück mindestens eines Längsseitenteils (2, 3) schräg zur Mitte des Basisteils verläuft, wodurch das Kabel oder die Anschlußader (23, 24) schräg zur Mittellinie des Basisteils geführt wird.

2. Kassette nach Anspruch 1,
**dadurch gekennzeichnet,**
daß die Ablageeinrichtung (6, 7, 8, 9, 13) so ausgebildet ist, daß die Lichtwellenleiter (25, 26) halb oder ganz um die beiden Ovale (28) führbar sind.

3. Kassette nach einem der vorhergehenden Ansprüche,
**dadurch gekennzeichnet,**
daß eine Halterung (29) für mehrere Verbindungselemente (27) und/oder Koppelelemente (40) an einer Längsseite (3) vorgesehen ist.

4. Kassette nach einem der vorhergehenden Ansprüche,
**dadurch gekennzeichnet,**
daß sie eine Aussparung (10) in einem Längsseitenteil (2) und/oder dem Kassettenboden (1) aufweist.

5. Kassette nach Anspruch 4,
**dadurch gekennzeichnet,**
daß weitere Niederhalter (11, 12) an der Aussparung (10) zur Fixierung von durch die Aussparung (10) laufenden Verbindungsleitungen (37, 38, 39) vorgesehen sind und ein weiterer Niederhalter (13) im Bereich der Aussparung (10) zur Führung von um die Ovale verlaufenden Lichtwellenleitern vorgesehen ist.

6. Kassette nach einem der vorhergehenden Ansprüche,
**dadurch gekennzeichnet,**
daß die Aussparung (10) oder/und die Einführöffnungen (14, 15, 16, 17) für die Anschluß-Bündeladern (23, 24) mit ausbrechbaren Verschlußteilen (31, 32) versehen sind.

7. Kassettenblock mit mehreren Kassetten zum Koppeln oder Verzweigen von Lichtwellenleitern (25, 26), die durch mindestens ein Verbindungselement (27) oder Koppelelement (45) miteinander verbunden sind, wobei jede Kassette (K1 bis K4) ein schachtelförmigen Basisteil besitzt, das je zwei gegenüberliegenden zargenförmigen Längsseitenteile (2, 3) und zwei Stirnseitenteile (4, 5) aufweist, wobei im Basisteil eine Ablagevorrichtung vorhanden ist, die aus Niederhaltern besteht, die auf den Umfangslinien zweier nebeneinanderliegender Ovale angeordnet sind und deren Stege radial nach innen ragen, mit Einführungsöffnungen (14 - 17) in den äußeren Bereichen der Stirnseitenteile (23, 24), wobei zumindest an einer der Einführungsöffnung ein Teilstück des Längsseitenteils ( 2, 3) als Führung so ausgebildet ist, daß die Lichtwellenleiter (25, 26) zumindest nahezu tangential bezüglich der Ablageovale oder nach außen versetzt geführt werden,
**dadurch gekennzeichnet,**
daß die Niederhalter (6, 7) so ausgebildet sind, daß innerhalb jedes durch die Niederhalter definierten Ablageovals die abzulegenden Lichtwellenleiter (25, 26, 28) eine Form zwischen kreisförmig und oval annehmen könne, daß ein zentrale Niederhalter (8, 9) zwischen den Ablageovalen angebracht ist, der Stege für eine Fixierung der Lichtwellenleiter in einer achtförmigen, beide Ovale nutzenden Ablage aufweist, derart daß die Lichtwellenleiter entweder in einer beide Ovale umfassenden Acht oder kreis- bis ovalförmig in nur einem Ablageoval abgelegt werden können,
daß die Einführungsöffnungen (14 - 17) für die Aufnahme von Kabeln oder Anschlußadern (23, 24) ausgebildet sind und Befestigungsvorrichtungen Zugentlastungen (18) aufweisen und daß das Teilstück mindestens eines Längsseitenteils (2, 3) schräg zur Mitte des Basisteils verläuft, wodurch das Kabel oder die Anschlußader (23, 24) schräg zur Mittellinie des Basisteils geführt wird.

8. Kassettenblock nach Anspruch 7,
**dadurch gekennzeichnet,**
daß in den Aussparungen (10) des Kassettenbodens (1) verlaufende Verbindungsleitungen (37, 38, 39) und die Kassetten verbindende Scharniere (30, 41) zumindest nahezu in einer Ebene angeordnet sind.

9. Kassettenblock nach Anspruch 7,
**dadurch gekennzeichnet,**
daß die Kassetten (K1) mit in Gelenkbandöffnungen (42) verlaufenden elastischen Bändern (30, 41) verbunden sind.

10. Kassettenblock nach einem der Ansprüche 7 bis 9,
**dadurch gekennzeichnet,**
daß in einer Kassette (K4) nur Koppelelemente (45) und in den übrigen Kassetten (K1, K2, K3) nur Verbindungselemente (27) vorgesehen sind.

11. Kassettenblock nach einem der Ansprüche 7 bis 10,
**dadurch gekennzeichnet,**
daß jede Kassette (K1, K2, K3, K3) gemäß einem der Ansprüche 2 bis 6 ausgebildet ist.

## Claims

1. Cartridge for holding optical fibres (25, 26), which are connected to one another by at least one connecting element (27) or coupling element (45), having a box-shaped base part which in each case has two opposite groove-shaped longitudinal side parts (2, 3) and two end-face parts (4, 5), there being present in the base part a depositing device which comprises hold-downs which are arranged on the contours of two juxtaposed ovals and whose webs project radially inwards, having insertion openings (14-17) in the outer regions of the end-face parts (23, 24), a segment of the longitudinal side part (2, 3) being constructed at least at one of the insertion openings as a guide so that the optical fibres (25, 26) are guided at least virtually tangentially with respect to the deposition ovals, or in a fashion offset to the outside, characterized in that the hold-downs (6, 7) are constructed such that inside each deposition oval defined by the hold-downs, the optical fibres (25, 26, 28) to be deposited can assume a shape between circular and oval, in that a central hold-down (8, 9) is fitted between the deposition ovals and has webs for fixing the optical fibres in a deposition, shaped like a figure 8 and using both ovals, in such a way that the optical fibres can be deposited either in an eight comprising both ovals, or in a shape which is from circular to oval in only one deposition oval, in that the insertion openings (14-17) are constructed for holding cables or connecting fibres (23, 24) and have fastening devices (18), and in that the segment of at least one longitudinal side part (2, 3) extends obliquely relative to the middle of the base part, as a result of which the cable or the connecting fibre (23, 24) is guided obliquely relative to the mid-line of the base part.

2. Cartridge according to Claim 1, characterized in that the deposition device (6, 7, 8, 9, 13) is constructed so that the optical fibres (25, 26) can be guided partly or wholly around the two ovals (28).

3. Cartridge according to one of the preceding claims, characterized in that a holder (29) for a plurality of connecting elements (27) and/or coupling elements (40) is provided on one longitudinal side (3).

4. Cartridge according to one of the preceding claims, characterized in that it has a cutout (10) in one longitudinal side part (2) and/or the cartridge floor (1).

5. Cartridge according to Claim 4, characterized in that further hold-downs (11, 12) are provided at the cutout (10) for the purpose of fixing connecting lines (37, 38, 39) running through the cutout (10), and a further hold-down (13) is provided in the region of the cutout (10) for the purpose of fixing optical fibres extending around the ovals.

6. Cartridge according to one of the preceding claims, characterized in that the cutout (10) and/or the insertion openings (14, 15, 16, 17) are provided with knock-out sealing parts (31, 32) for the connecting multifibre units (23, 24).

7. Cartridge stack having a plurality of cartridges for coupling or branching optical fibres (25, 26) which are connected to one another by at least one connecting element (27) or coupling element (45), each cartridge (K1 to K4) having a box-shaped base part which in each case has two opposite groove-shaped longitudinal side parts (2, 3) and two end-face parts (4, 5), there being present in the base part a depositing device which comprises hold-downs which are arranged on the contours of two juxtaposed ovals and whose webs project radially inwards, having insertion openings (14-17) in the outer regions of the end-face parts (23, 24), a segment of the longitudinal side part (2, 3) being constructed at least at one of the insertion openings as a guide so that the optical fibres (25, 26) are guided at least virtually tangentially with respect to the deposition ovals, or in a fashion offset to the outside, characterized in that the hold-downs (6, 7) are constructed such that inside each deposition oval defined by the hold-downs, the optical fibres (25, 26, 28) to be deposited can assume a shape between circular and oval, in that a central hold-down (8, 9) is fitted between the deposition ovals and has webs for fixing the optical fibres in a deposition, shaped like a figure 8 and using both ovals, in such a way that the optical fibres can be deposited either in an eight comprising both ovals, or in a shape which is from circular to oval in only one deposition oval, in that the insertion openings (14-17) are constructed for holding cables or connecting fibres (23, 24) and have fastening devices (18), and in that the segment of at least one longitudinal side part (2, 3) extends obliquely relative to the middle of the base part, as a result of which the cable or the connecting fibre (23, 24) is guided obliquely relative to the mid-line of the base part.

8. Cartridge stack according to Claim 7, characterized in that connecting lines (37, 38, 39) extending in the cutouts (10) of the cartridge floor (1) and hinges (30, 41) joining the cartridges are arranged at least virtually in one plane.

9. Cartridge stack according to Claim 7, characterized in that the cartridges (K1) are connected by elastic tapes (30, 41) extending in articulated tape openings (42).

10. Cartridge stack according to one of Claims 7 to 9, characterized in that only coupling elements (45) are provided in one cartridge (K4), and only connecting elements (27) are provided in the remaining cartridges (K1, K2, K3).

11. Cartridge stack according to one of Claims 7 to 10, characterized in that each cartridge (K1, K2, K3, K3) is constructed in accordance with one of Claims 2 to 6.

## Revendications

1. Cassette destinée à recevoir des guides (25, 26) d'ondes lumineuses qui sont reliés entre eux par au moins un élément (27) de jonction ou par un élément (45) de couplage, comportant une partie de base en forme de boîte qui présente en vis-à-vis deux éléments (2, 3) formant les côtés longitudinaux et deux éléments (4, 5) formant les côtés frontaux, la partie de base comportant un dispositif de support qui est formé de dispositifs presseurs qui sont disposés sur les lignes circonférentielles de deux ovales situés côte à côte et dont les nervures font saillie radialement vers l'intérieur, comportant des orifices (14 à 17) d'introduction dans les zones extérieures des éléments (4, 5) formant les côtés frontaux, un tronçon de l'élément (2, 3) formant le côté longitudinal étant, au moins au niveau de l'un des orifices d'introduction, réalisé sous forme de pièce de guidage de telle manière que les guides (25, 26) d'ondes lumineuses sont amenés au moins approximativement tangentiellement aux ovales de support ou en étant décalés vers l'extérieur,
caractérisée en ce
que les dispositifs presseurs (6, 7) sont réalisés de telle manière que les guides (25, 26, 28) d'ondes lumineuses à déposer peuvent prendre une forme comprise entre le cercle et l'ovale à l'intérieur de chaque ovale de support défini par les dispositifs presseurs,
qu'un dispositif presseur (8, 9) central est disposé entre les ovales de support, lequel dispositif presseur comporte des nervures pour immobiliser les guides d'ondes lumineuses déposés sous la forme d'un huit en utilisant les deux ovales de telle sorte que les guides d'ondes lumineuses peuvent être déposés soit dans un huit comprenant les deux ovales soit selon une forme circulaire à ovale dans un seul ovale de support, que les orifices (14 à 17) d'introduction sont conçus pour recevoir des câbles ou des fils (23, 24) de raccordement et présentent des dispositifs (18) de fixation et
que le tronçon d'au moins d'un élément (2, 3) formant le côté longitudinal s'étend en biais par rapport au milieu de la partie de base, le câble ou le fil (23, 24) de raccordement étant de ce fait guidé en biais par rapport à la ligne médiane de la partie de base.

2. Cassette selon la revendication 1,
caractérisée en ce
que le dispositif (6, 7, 8, 9, 13) de support est réalisé de telle manière que les guides (25, 26) d'ondes lumineuses peuvent passer à moitié ou complètement autour des deux ovales (28).

3. Cassette selon l'une des revendications précédentes,
caractérisée en ce
qu'un support (29) pour plusieurs éléments (27) de jonction et/ou éléments (45) de couplage est prévu sur un côté (3) longitudinal.

4. Cassette selon l'une des revendications précédentes,
caractérisée en ce
qu'elle comporte un évidement (10) dans un élément (2) formant un côté longitudinal et/ou dans son fond (1).

5. Cassette selon la revendication 4,
caractérisée en ce
que d'autres dispositifs presseurs (11, 12) sont prévus au niveau de l'évidement (10) pour fixer des lignes (37, 38, 39) de raccordement passant par l'évidement (10) et qu'un autre dispositif presseur (13) est prévu dans la région de l'évidement (10) pour guider des guides d'ondes lumineuses passant autour des ovales.

6. Cassette selon l'une des revendications précédentes,
caractérisée en ce
que l'évidement (10) ou/et les orifices (14, 15, 16, 17) d'introduction pour les fils (23, 24) de raccordement en faisceaux est (sont) pourvu (s) d'éléments (31, 32) de fermeture pouvant être rompus.

7. Bloc de cassettes comprenant plusieurs cassettes pour le couplage ou le branchement en dérivation de guides (25, 26) d'ondes lumineuses qui sont reliés entre eux par au moins un élément (27) de jonction ou par un élément (45) de couplage, chaque cassette (K1 à K4) possédant une partie de base en forme de boîte qui présente en vis-à-vis deux éléments (2, 3) formant les côtés longitudinaux et deux éléments (4, 5) formant les côtés frontaux, la partie de base comportant un dispositif de support qui est formé de dispositifs presseurs qui sont disposés sur les lignes circonférentielles de deux ovales situés côte à côte et dont les nervures font saillie radialement vers l'intérieur, comportant des orifices (14 à 17) d'introduction dans les zones extérieures des éléments (4, 5) formant les côtés frontaux, un tronçon de l'élément (2, 3) formant le côté longitudinal étant, au moins au niveau de l'un des orifices d'introduction, réalisé sous forme de guide de telle manière que les guides (25, 26) d'ondes lumineuses sont amenés au moins approximativement tangentiellement aux ovales de support ou en étant décalés vers l'extérieur,
caractérisé en ce
que les dispositifs presseurs (6, 7) sont réalisés de telle manière que les guides (25, 26, 28) d'ondes lumineuses à déposer peuvent prendre une forme comprise entre le cercle et l'ovale à l'intérieur de chaque ovale de support défini par les dispositifs presseurs,
qu'un dispositif presseur (8, 9) central est disposé entre les ovales de support, lequel dispositif presseur comporte des nervures pour immobiliser les guides d'ondes lumineuses déposés sous la forme d'un huit en utilisant les deux ovales de telle sorte que les guides d'ondes lumineuses peuvent être déposés soit dans un huit comprenant les deux ovales soit selon une forme circulaire à ovale dans un seul ovale de support,
que les orifices (14 à 17) d'introduction sont conçus pour recevoir des câbles ou des fils (23, 24) de raccordement et présentent des dispositifs (18) de fixation (éléments porteurs) et
que le tronçon d'au moins d'un élément (2, 3) formant le côté longitudinal s'étend en biais par rapport au milieu de la partie de base, le câble ou le fil (23, 24) de raccordement étant de ce fait guidé en biais par rapport à la ligne médiane de la partie de base.

8. Bloc de cassettes selon la revendication 7,
caractérisé en ce que des lignes (37, 38, 39) de raccordement passant dans les évidements (10) du fond (1) de la cassette et des charnières (30, 41) reliant les cassettes sont disposées au moins approximativement dans un plan.

9. Bloc de cassettes selon la revendication 7,
caractérisé en ce
que les cassettes (K1) sont reliées par des bandes (30, 41) élastiques passant par des orifices (42) de charnière.

10. Bloc de cassettes selon l'une des revendications 7 à 9,
caractérisé en ce
que dans une cassette (K4) il est prévu uniquement des éléments (45) de couplage et dans les autres cassettes (K1, K2, K3) uniquement des éléments (27) de jonction.

11. Bloc de cassettes selon l'une des revendications 7 à 10,
caractérisé en ce
que chaque cassette (K1, K2, K3, K4) est réalisée suivant l'une des revendications 2 à 6.
